# EUROPEAN PATENT SPECIFICATION

(11) **EP 1 895 721 B1**
(45) Date of publication and mention of the grant of the patent: **30.06.2010**
(21) Application number: 07017026.1
(22) Date of filing: 30.08.2007
(51) Int. Cl.: H04L 12/56

(54) **Method and apparatus for end-to-end link detection and policy routing switching**
Verfahren und Vorrichtung zur Erkennung von End-to-end-Verknüpfungen und zur Umschaltung von Richtlinienroutings
Procédé et appareil pour détection de lien de bout en bout et commutation de routage de politique

(30) Priority: 30.08.2006 CN 200610127707
(43) Date of publication of application: 05.03.2008
(73) Proprietor: Huawei Technologies Co., Ltd., Longgang District, Shenzhen Guangdong 518129 (CN)
(72) Inventor: Zhang, Zhifeng, Shenzhen 518129 Guangdong (CN); Xiaowu, Li, Shenzhen 518129 Guangdong (CN); Cao, Qin, Shenzhen 518129 Guangdong (CN)
(74) Representative: Reinhard - Skuhra - Weise & Partner GbR

(56) References cited:
- EP-A- 1 596 531
- US-A1- 2002 131 362
- AGGARWAL R: "OAM mechanisms in MPLS layer 2 transport networks" IEEE COMMUNICATIONS MAGAZINE, IEEE SERVICE CENTER, PISCATAWAY, US, vol. 42, no. 10, October 2004 (2004-10), pages 124-130, XP011120085 ISSN: 0163-6804
- KATZ JUNIPER NETWORKS D WARD CISCO SYSTEMS D: "Bidirectional Forwarding Detection; draft-ietf-bfd-base-05.txt" IETF STANDARD-WORKING-DRAFT, INTERNET ENGINEERING TASK FORCE, IETF, CH, vol. bfd, no. 5, June 2006 (2006-06), XP015045030 ISSN: 0000-0004

## Description

### Field of the Invention

The present invention relates to the network detection technique, and more particularly, to a method and apparatus for end-to-end link detection, and a method and apparatus for policy routing switching.

### Background of the Invention

At present, with the fast development of the combination of three networks, i.e. the combination of voice, video and data networks, various services have higher and higher requirements on the availability of the Internet Protocol (IP) bearer network. The network availability refers to a percentage of the total time to the time for transmitting data under the condition that the quality requirement is satisfied. If a network has high availability, the network can provide a service for a long time without a failure. Currently, according to a main measure for improving the network availability, with redundant equipment and redundant links configured, a failure can be detected quickly and equipment or a link in failure can be quickly switched to shorten the Mean Time to Repair (MTTR), thus the network availability is improved.

At present, along with the requirement of high network availability, Fast Rerouting (FRR) techniques, e.g., IP FRR, Label Distribute Protocol (LDP) FRR and Traffic Engineering (TE) FRR, emerge as the times require. The FRR techniques depend on the fast failure detection for a link or a node, and demands on the technique of the fast failure detection for a link or a node become higher and higher.

Bidirectional Forwarding Detection (BFD) is a common technique of fast failure detection independent of any bottom layer protocols. By the BFD, a BFD control packet is quickly sent from one of the two nodes to the other periodically; if one node has not received the BFD control packet sent from the other node within an agreed period of time, there is a failure on the link between the two nodes.

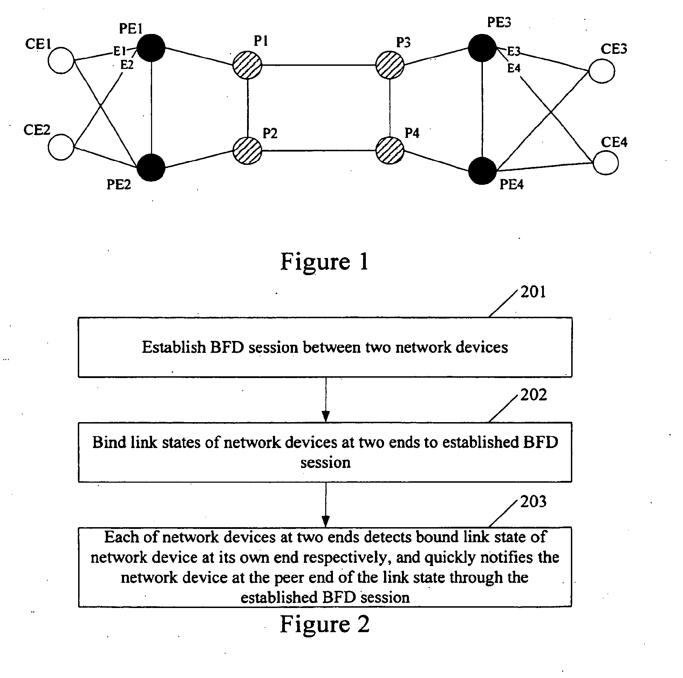

Figure 1 is a schematic diagram illustrating the networking. In Figure 1, darkened circles represent Customer Equipment (CE), white circles represent Providers Edge (PE) of the network, and shaded circles represent Providers (P) of the network. In the network shown in Figure 1, a BFD session may be established between PEs with full mesh to provide end-to-end reliability. In this way, the link state between any two PEs can be quickly detected and be learned by a PE, and policy routing switching may be initiated. However, in the existing BFD technique, such a detection mechanism can only detect the link between two nodes with a BFD session established, but not links between other two nodes. For example, in the network shown in Figure 1, the BFD session established between PE1 and PE3 can only be used to detect the link state between PE1 and PE3, but not the state of link E1 between PE1 and CE1 or the state of link E2 between PE1 and CE2, nor the state of link E3 between PE3 and CE3 or the state of link E 4 between PE3 and CE4. Therefore, if any of links E1, E2, E3 and E4 is in failure, the PE at the peer end cannot learn the failure, and cannot switch the policy routing in time. As a result, the network reliability and availability is greatly reduced.

In addition, under certain circumstances, the end-to-end link detection cannot be configured using the existing BFD technique. In the network shown in Figure 1, in order to provide the end-to-end reliability between CE1 and CE3, a BFD session has to be established between CE1 and CE3. However, a large amount of CE does not support the BFD technique, if CE1 and CE3 do not support the BFD technique, the BFD session cannot be established between CE1 and CE3, and the end-to-end reliability between CE1 and CE3 cannot be provided. Thus, the link detection mechanism cannot be actually provided for the end-to-end reliability.

EP-A-1 596531 describes a method for a provider network propagating a remote link fault condition via an Ethernet Alarm Indication and Suppression (AIS) frame or a Continuity Check (CC) frame, which is translated into a locally compliant non-IEEE 802.1ag error delivery condition so that a management entity associated with a first customer network site coupled to the provider network is appropriately alerted.

However, EP-A-1 596531 does not disclose a method for end-to-end link detection using the existing BFD technique.

US 2002/131362 describes a method for network routing using link failure information to accelerate convergence of routing information after a network fault.

### Summary of the Invention

In view of the above, an embodiment of the present invention provides a method for policy routing switching, which can quickly initiate policy routing switching when a link is in failure.

An embodiment of the present invention provides an apparatus for policy routing switching, which can quickly initiate policy routing switching when a link is in failure.

In the embodiment of the present invention, in the method for policy routing switching, when a link state of a first PE is bound to a BFD session established between the first PE and a second PE, recording, by the second PE, link state information of the first PE in the second PE upon receiving the link state information of the first PE through the BFD session; configuring a relation between a policy routing and a link; determining a link corresponding to a selected policy routing according to the relation between a policy routing and a link, and searching the link state information of the first PE in the second PE for a state of the link corresponding to the selected policy routing; adopting the selected policy routing if the state of the link is normal; switching to a second policy routing if the state of the link is abnormal, wherein the link state of the first PE is a state of a link between a Customer Equipment, CE, and the first PE.

Preferably, the second PE records the link state information of the first PE through end-to-end link detection which comprises:
detecting, by the first PE, the link state of the first PE (203, 503), and
notifying, by the first PE, the second PE of the link state information of the first PE through the BFD session (203, 503), and
recording, by the second PE, the link state information of the first PE from the first PE in the second PE.

In the embodiment of the present invention, the apparatus for policy routing switching includes: a link state record unit, for recording link state information of a PE at a peer end, wherein a link state of the PE at the peer end is bound to a BFD session and the link state information of the PE at the peer end is received through the BFD session; a link related policy routing unit, for configuring a relation between a policy routing and a link; and a switching unit, for determining a link corresponding to a selected policy routing according to the relation between a policy routing and a link, and switching a policy routing according to a state of the link corresponding to the selected policy routing recorded in the link state record unit, wherein the link state of the PE at the peer end is a state of a link between a Customer Equipment, CE, and the PE at the peer end.

According to the end-to-end link detection provided in an embodiment of the present invention, the link between two nodes with a reliability detection mechanism session (i.e. the BFD session) can be detected. Further more, the states of other links are bound to the reliability detection mechanism session and the states of other links are reported through the reliability detection mechanism session, thus the range of the links is broadened which can be detected by one reliability detection mechanism session, and the end-to-end link detection is implemented. At the same time, according to the method provided by an embodiment of the present invention for binding states of links to the reliability detection mechanism session, the link detection mechanism can also be configured between network devices not supporting the reliability detection mechanism; or the apparatus for end-to-end link detection can be added to the network devices not supporting the reliability detection mechanism, and the link detection mechanism can thus be configured.

In this way, the end-to-end link detection can be implemented between any network devices. Moreover, in the link detection configuration above, when a state of a link which is bound changes, the network device at the peer end is notified of the change in time, and real-time detection can be achieved in a low overhead. In addition, the end-to-end link detection provided by an embodiment of the present invention also provide a good detection mechanism for policy routing switching, in other words, because the network device can quickly learn the change of the state of the end-to-end link, the policy routing switching can be initiated quickly, and the network availability is improved. At the same time, as the apparatus for policy routing switching provided by an embodiment of the present invention is added to the network device, the policy routing switching can be initiated quickly when a link is in failure. Moreover, in the method and apparatus for policy routing switching, whenever a policy routing is selected, whether the link corresponding to the selected policy routing is normal is detected, and the feasibility of the policy routing is improved.

### Brief Description of the Drawings

Figure 1 is a schematic diagram illustrating the existing networking.
Figure 2 is a flowchart illustrating a method for end-to-end link detection in accordance with an embodiment of the present invention.
Figure 3 is a flowchart illustrating a method for policy routing switching in accordance with an embodiment of the present invention.
Figure 4 is a schematic diagram illustrating networking in accordance with an embodiment of the present invention.
Figure 5 is a flowchart illustrating a method for end-to-end link detection in accordance with an embodiment of the present invention.
Figure 6 is a flowchart illustrating a method for policy routing switching in accordance with an embodiment of the present invention.
Figure 7 is a flowchart illustrating a structure of the apparatus for end-to-end link detection in accordance with an embodiment of the present invention.
Figure 8 is a flowchart illustrating a structure of the apparatus for policy routing switching in accordance with an embodiment of the present invention.

### Detailed Description of the Invention

Embodiments of the present invention are described as follows in detail with reference to the accompanying drawings to make technical solution and merits of the present invention more apparent.

An embodiment of the present invention provides a method for end-to-end link detection. A reliability detection mechanism session is established between two network devices. When a first network device at one end would detect the state of one or more links of a second network device at the other end, the state of one or more links of the second network device is bound to the reliability detection mechanism session. Thus, the second network device at the other end notifies the first network device of the link states of the second network device through the reliability detection mechanism session. The reliability detection mechanism in this embodiment may be any detection mechanism, for example, the BFD technique.

In an embodiment of the present invention, the BFD technique is taken as an example to describe the method for the end-to-end link detection in detail.

Figure 2 is a flowchart for the end-to-end link detection in an embodiment of the present invention, the method is described below.

Block 201: Establish a BFD session between two network devices.

Block 202: Bind link states of the two network devices to the BFD session.

In Block 202 above, a link of a network device may be the link between the network device and another network device, or the link between the network device and client equipment. The link is a link in broad sense. It may be a logic link or a physical link. For the physical link, the link may be represented as a port of a network device.

In this Block, the process of binding link states to the BFD session may include: creating, by a network device locally, a link state list for links which a network device at the peer end desires to detect. The links which the network device at the peer end tends to detect may be a trouble suffering link or a key link.

For example, supposing that two network devices are a first network device and a second network device respectively, the process of binding, by the second network device, to the BFD session the link states of the second network device which the first network device desires to detect is: creating, by the second network device locally, a link state list of the second network device. Similarly, the process of binding the link states of the first network device which the second network device tends to detect is: creating, by the first network device, locally a link state list of the first network device.

Block 203: Either of the two network devices at the two ends respectively detects the link states of the network device at its own end and the link states of the network device being bound to the BFD session, and notifies the network device at the peer end of the link states quickly through the BFD session to which the link states are bound.

The process of detecting the link states bound to the BFD session may include: detecting the state of each link in the link state list created in Block 202 periodically. The link state may be detected through the BFD technique or other detection techniques.

In this Block, the network device may notify the network device at the peer end of the link state detected each time, and the network device at the peer end can learn the link state in real time.

The process of the network device detecting the link state may also include: detecting whether there is a change in a link state. According to this process, only when the network device detects a change in the link state of the network device, the network device notifies the network device at the peer end of the changed link state. Thus the load of the network is lightened. The change in a link state means that the link state changes from normal state to abnormal state, or changes from abnormal state to normal state. When a link is disconnected, in failure or the like, the link may be regarded as abnormal.

For example, supposing that two network devices are a first network device and a second network device respectively, the second network device periodically detects the state of each link in the link state list. When detecting a change in a link state of the second network device, the second network device notifies the first network device of the changed link state through the BFD session. Similarly, the first network device periodically detects the state of each link in the link state list. When detecting a change in a link state of the first network device, the first network device notifies the second network device of the changed link state through the BFD session.

In this embodiment, for the purpose of carrying the link state information in the BFD session without changing the packet format of the existing BFD protocol, a new field is set in the existing BFD packet to indicate the link state information. In this way, the link state is sent to the network device at the peer end by the new field including the link state.

Through the method above, fast end-to-end link detection can be implemented. Such an end-to-end link detection mechanism may provide a basis for the fast policy routing switching. On the basis of the end-to-end link detection mechanism above, an embodiment of the present invention provides a method for policy routing switching. A network device parses the BFD session from a network device at the peer end to obtain the link state of the network device at the peer end, and switches, according to the link state, the policy routing corresponding to the link in the abnormal state to the policy routing corresponding to the link in the normal state.

In the end-to-end link detection mechanism described above, upon receiving the link state information of the network device at the peer end through the BFD session, the network device records the link state information of the network device at the peer end. For the implementation of the above, the network device locally creates a link state list of the network device at the peer end, and records the link state information of the network device at the peer end obtained through parsing the BFD session into the link state list of the network device at the peer end, where the network device obtains the link state information of the network device at the peer end through parsing the BFD session.

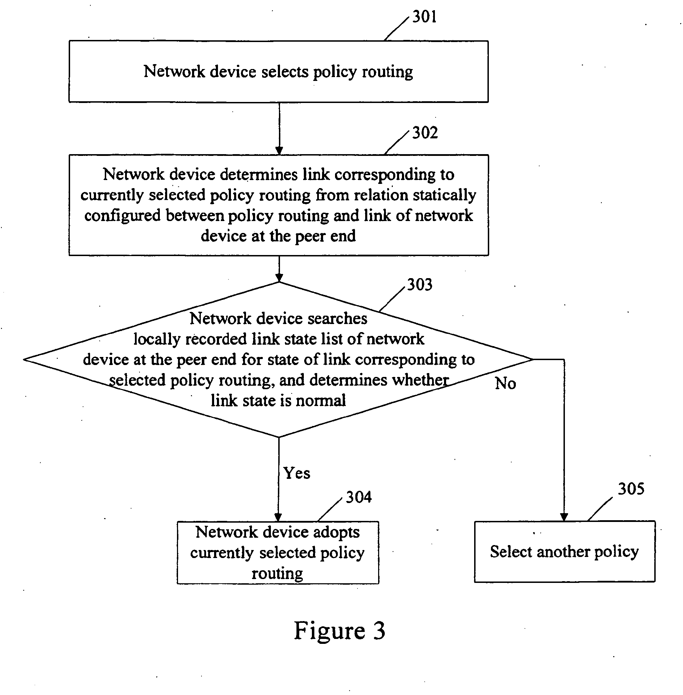

Specifically, when the policy routing switching is implemented, the network device first configures a relation between a policy routing and a link. For example, the relation can be configured statically. A link in the relation is a link contained in the policy routing, and the link may be a link bound to a BFD session, or any link between two nodes with a BFD session established. In this way, the policy routing can be switched according to the change of a link state. The process for policy routing switching shown in Figure 3 is described below.

Block 301: The network device selects a policy routing.

Block 302: The network device searches for the relation statically configured between a policy routing and a link, and finds a link corresponding to the selected policy routing.

Block 303: The network device searches for the link state list of the network device at the peer end for the state of the link corresponding to the selected policy routing, and determines whether the state of the link is normal. If the state of the link is normal, Block 304 is performed; otherwise, Block 305 is performed. The link state list of the network device at the peer end is stored in the network device locally.

Block 304: The network device adopts the selected policy routing, and terminates the process.

Block 305: The network device selects a new policy routing.

Upon selecting a new policy routing, the network device may also determine whether the new policy routing is available, i.e., Block 302 may be performed again after Block 305. In conclusion, whenever the network device selects a policy routing, Blocks 302-305 described above may be performed, , and the network device adopts a policy routing which the link corresponding to is normal for routing when the selected link corresponding to the policy routing is normal.

Through the Blocks above, the network device searches for the link state list of the network device at the peer end for the state of the link corresponding to the selected policy routing, and determines whether to switch the policy routing according to the state of the link corresponding to the selected policy routing. Because the network device can quickly find the state of the link of the network device at the peer end, the policy routing switching can be implemented quickly when a link state changes.

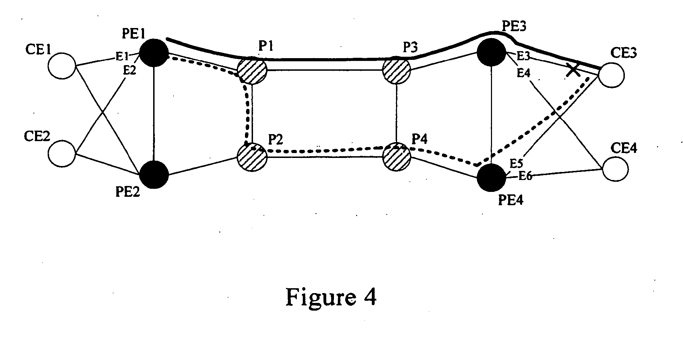

The method for end-to-end link detection and method for policy routing switching are described below in detail with reference to the networking shown in Figure 1. The networking shown in Figure 1 is illustrated again in Figure 4.

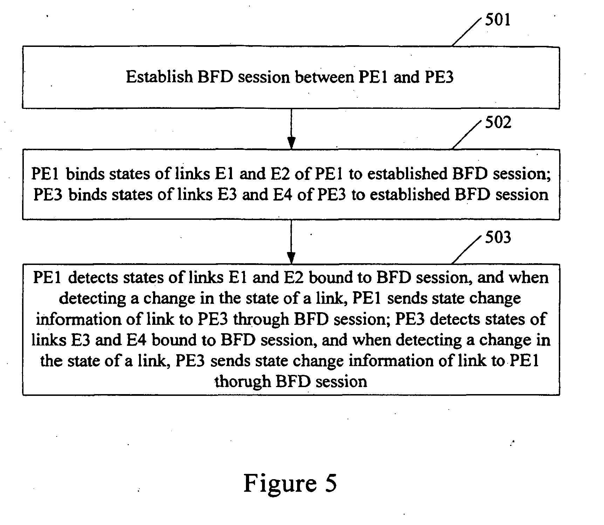

In the networking shown in Figure 4, the end-to-end links between CE1/CE2 and CE3/CE4 should be detected, where CE1/CE2 means CE1 or CE2, and CE3/CE4 means CE3 or CE4. For such link detection, the end-to-end link detection may be implemented according to the process shown in Figure 5, and the process is described below.

Block 501: Establish a BFD session between PE1 and PE3.

Block 502: PE1 binds states of links E1 and E2 of PE1 to the BFD session established, and PE3 binds states of links E3 and E4 of PE3 to the BFD session established.

In this Block, a link state may be bound to the BFD session through establishing, at PE1 locally, a link state list of PE1, i.e. PE1 locally establishes a link state list of its own device. A link state may be bound to the BFD session through locally establishing at PE3, a link state list of PE3, i.e., PE3 establishes a link state list of its own device locally.

Block 503: PE1 detects the states of links E1 and E2 bound to the BFD session. When detecting a change in a link state, PE1 sends the changed link state to PE3 through the BFD session. Similarly, PE3 detects the states of links E3 and E4 bound to the BFD session. When detecting a change in a link state, PE3 sends the changed link state to PE1 through the BFD session.

For example, in the networking shown in Figure 4, when there is a failure on link E3 between PE3 and CE3, PE3 can detect the failure on link E3 and send the failure state of link E3 to PE1 through the BFD session immediately. In this way, PE1 can learn in time whether the state of the link of PE3 is normal.

Certainly, in this embodiment, to detect the states of all links between CE1/CE2 and CE3/CE4, a BFD session may be established between PE2 and PE4. Moreover, the state of the link between PE2 and CE1, and the state of the link between PE2 and CE2 are bound to the BFD session. Similarly, the state of the link between PE4 and CE3, and the state of the link between PE4 and CE4 are bound to the BFD session. A BFD session may be further established between PE1 and PE4, and a BFD session may also be established between PE2 and PE3, and the states of corresponding links between PE and CE are bound to a corresponding BFD session. In this way, the network can learn the states of all links between CE1/CE2 and CE3/CE4.

In the networking shown in Figure 4, when the end-to-end link detection mechanism described above is configured, each PE can implement fast policy routing switching. The process of PE1 switching a policy routing from PE1 to CE3 is described below.

PE1 interacts with PE3 and PE4, and obtains two routing policies from PE1 to CE3: one policy routing from PE1 to CE3 via PE3 and the other policy routing from PE1 to CE3 via PE4. PE1 can obtain the policy routing according to the prior art, and there is no more description.

For the implementation of policy routing switching, PE1 needs to locally configure the relation between a policy routing from PE1 to CE3 and a corresponding link.

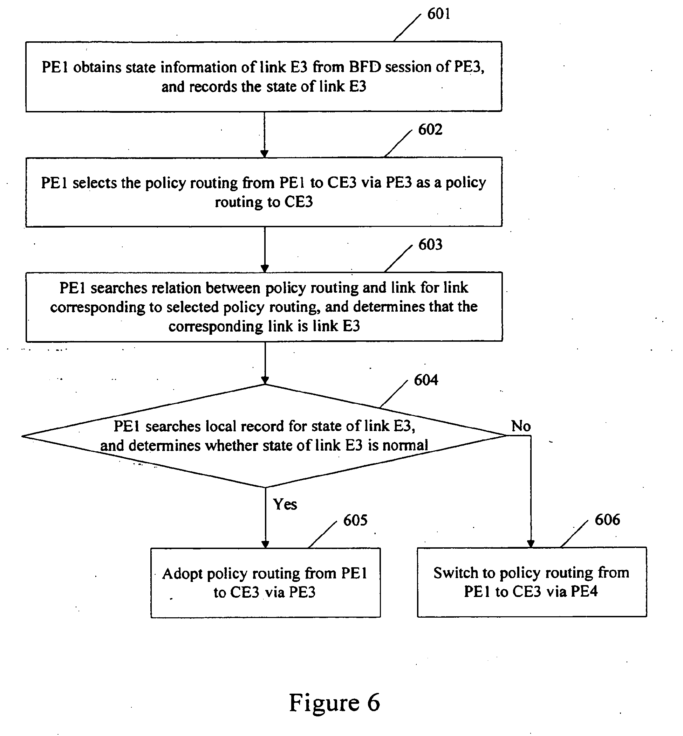

After PE1 implements the configuration above, the method for policy routing switching shown in Figure 6 is described below, where the policy routing is from PE1 to CE3.

Block 601: PE1 obtains the state of link E3 from the BFD session of PE3, and records the state of link E3.

PE1 may locally create a link state list of the network device at the peer end. In this way, PE1 may record the state of link E3 obtained from the BFD session in the link state list of the network device at the peer end.

Block 602: PE1 selects the policy routing from PE1 to CE3 via PE3 as a policy routing to CE3.

Block 603: PE1 searches for the relation between a policy routing and a link for a link corresponding to the selected policy routing, and determines that the corresponding link is link E3.

Blocks 604-606: PE1 searches for the link state list of the network device at the peer end for the state of link E3, and determines whether the state of link E3 is normal. If the state of link E3 is normal, PE1 adopts the policy routing from PE1 to CE2 via PE3; otherwise, PE1 switches to the policy routing from PE1 to CE3 via PE4. The link state list of the network device at the peer end is created by PE1.

According to the Blocks above, supposing there is a failure on the link between PE3 and CE3, PE1 obtains that link E3 is in a failure state in Block 601 above. Thus, when PE1 selects the policy routing from PE1 to CE3 via PE3, PE1 switches the policy routing in Blocks 604-606 because link E3 is in a failure state, in other words, PE1 selects the policy routing from PE1 to CE3 via PE4 as a policy routing. As shown in Figure 4, the policy routing to CE3 originally selected by PE1 is the policy routing shown in a bold real line, and PE1 switches the policy routing to the policy routing shown in a dotted line because link E3 corresponding to the policy routing to CE3 originally selected by PE1 is in a failure state.

For the purpose of ensuring that link E5 in the policy routing from PE1 to CE3 via PE4 is normal, PE1 determines that link E5 is normal through Blocks 603-606 and adopts the policy routing from PE1 to CE3 via PE4. If link E5 is in failure, PE1 selects another policy routing again. For this purpose, a BFD session between PE1 and PE4 should be established besides the BFD session between PE1 and PE3, and the link detection mechanism in this embodiment of the present invention should be adopted. In this case, PE1 should locally configure the relation between a policy routing to CE3 and a corresponding link. The relation is: the policy routing to CE3 via PE3 corresponding to link E3, and the policy routing to CE3 via PE3 corresponding to link E5. PE1 has to locally create a link state list of PE3 and PE4. The link state list of PE3 and PE4 contains the states of links E3, E4, E5 and E6. Furthermore, with respect to a complex network structure, BFD sessions capable of detecting links corresponding to all routing policies should be established to insure that a feasible policy routing is adopted, and the process above is repeatedly performed, thus a feasible policy routing can be selected eventually.

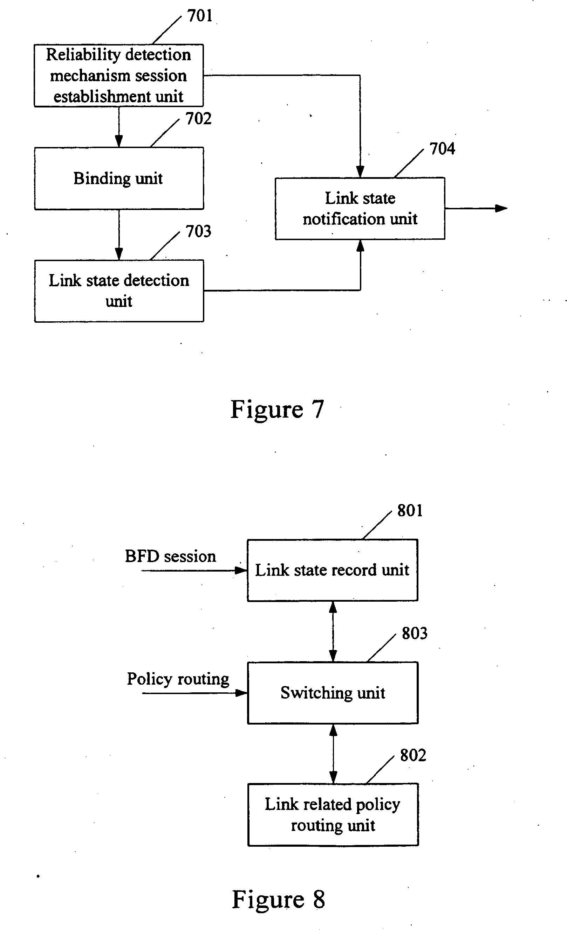

An apparatus for end-to-end link detection is given below. As shown in Figure 7, the apparatus includes: a reliability detection mechanism session establishment unit 701, a binding unit 702, a link state detection unit 703, and a link state notification unit 704. The reliability detection mechanism session establishment unit 701 establishes a reliability detection mechanism session. The binding unit 702 binds a link state to the reliability detection mechanism session established. The link state detection unit 703 detects the link state bound to the reliability detection mechanism session. The link state notification unit 704 reports the link state through the reliability detection mechanism session.

In an actual network, through setting the apparatus for end-to-end link detection described above in a node which needs to implement the end-to-end link detection, the node can thus implement the end-to-end link detection. The apparatus may be set inside or outside a network device. In this way, the network device not supporting the BFD technique can also be configured with an end-to-end link detection mechanism, just through adding an apparatus for end-to-end link detection to the node where the network device is located.

An apparatus for policy routing switching is given below. As shown in Figure 8, the apparatus includes: a link state record unit 801, a link related policy routing unit 802, and a switching unit 803. The link state record unit 801 records the link state information of the network device at the peer end, and the link state information is received through the reliability detection mechanism session. The link related policy routing unit 802 configures the relation between a policy routing and a link. The switching unit 803 determines a link corresponding to a currently selected policy routing according to the relation configured by the link related policy routing unit 802, and implements the policy routing switching according to the state of the link which is recorded by the link state record unit 801.

The foregoing are only preferred embodiments of the present invention and are not for use in limiting the protection scope of the present invention. All the modifications, equivalent replacements or improvements within the scope defined by the claims shall be included in the protection scope of the present invention.

## Claims

1. A method for end-to-end policy routing switching, comprising:
when a link state of a first Provider Equipment, PE, is bound to a Bidirectional Forwarding Detection (BFD) session established between the first PE and a second PE,
recording, by the second PE, link state information of the first PE in the second PE upon receiving the link state information of the first PE through the BFD session (601);
configuring a relation between a policy routing and a link;
determining a link corresponding to a selected policy routing according to the relation between a policy routing and a link (301, 302, 602, 603), and
searching the link state information of the first PE in the second PE for a state of the link corresponding to the selected policy routing (303, 604);
adopting the selected policy routing if the state of the link is normal (304, 605);
switching to a second policy routing if the state of the link is abnormal (305, 606);
wherein the link state of the first PE is a state of a link between a Customer Equipment, CE, and the first PE.

2. The method of Claim 1, further comprising:
determining whether a state of a link corresponding to the second policy routing is normal upon switching to the second policy routing; and
determining to switch to another policy routing when the state of the link corresponding to the second policy routing is abnormal.

3. The method of Claim 1, wherein recording the link state information of the first PE (601) comprises:
creating a first link state list of the first PE in the second PE ; and
searching the link state information of the first PE in the second PE for a state of the link comprises:
searching the first link state list for the state of the link.

4. The method of Claim 1 or 2, wherein recording, by the second PE, the link state information of the first PE in the second PE upon receiving the link state information of the first PE through the BFD session (601) comprises:
detecting, by the first PE, the link state of the first PE (203, 503), and
notifying, by the first PE, the second PE of the link state information of the first PE through the BFD session (203, 503), and
recording, by the second PE, the link state information of the first PE from the first PE in the second PE.

5. The method of Claim 4, wherein detecting the link state of the first PE (203, 503) comprises:
detecting whether there is a change in the link state of the first PE; and
notifying the second PE of the link state information of the first PE (203, 503) comprises:
notifying the second PE of the link state information of the first PE through the BFD session when there is a change in the link state of the first PE.

6. The method of Claim 5, wherein the change in the link state comprises one of:
the change in the link state of the first PE from a normal state to an abnormal state; and
the change in the link state of the first PE from an abnormal state to a normal state.

7. The method of Claim 4, wherein the link state of the first PE is bound to the BFD session through:
creating, by the first PE , locally a first link state list for the link state of the first PE.

8. The method of Claim 7, wherein detecting the link state of the first PE (203, 503) comprises:
detecting each link state in the first link state list.

9. The method of Claim 4, wherein notifying the second PE of the link state information of the first PE through the BFD session (203, 503) comprises:
including the link state of the first PE in a field of a packet of the BFD session, and
sending the packet to the second PE; wherein
the field is set in the packet for indicating the link state.

10. The method of Claim 5, wherein notifying the second PE of the link state of the first PE through the BFD session (203, 503) comprises:
including the changed link state of the first PE in a field of a packet of the BFD session, and
sending the packet to the second PE ; wherein
the field is set in the packet for indicating the link state.

11. An apparatus for end-to-end policy routing switching, comprising:
a link state record unit (801), for recording link state information of a Provider Equipment, PE, at a peer end, wherein a link state of the PE at the peer end is bound to a reliability detection mechanism session and the link state information of the PE at the peer end is received through the BFD session;
a link related policy routing unit (802), for configuring a relation between a policy routing and a link; and
a switching unit (803), for determining a link corresponding to a selected policy routing according to the relation between a policy routing and a link, and switching a policy routing according to a state of the link corresponding to the selected policy routing recorded in the link state record unit;
wherein the link state of the PE at the peer end is a state of a link between a Customer Equipment, CE, and the PE at the peer end.

## Patentansprüche

1. Verfahren zur Ende-zu-Ende-Richtlinien-Routing-Umschaltung, mit den folgenden Schritten:
wenn ein Streckenzustand eines ersten Anbietergeräts PE an eine zwischen dem ersten PE und einem zweiten PE hergestellte Sitzung mit Bidirectional Forwarding Detection (BFD) gebunden ist,
Aufzeichnen von Streckenzustandsinformationen des ersten PE in dem zweiten PE durch das zweite PE beim Empfang der Streckenzustandsinformationen des ersten PE durch die BFD-Sitzung (601);
Konfigurieren einer Beziehung zwischen einem Richtlinien-Routing und einer Strecke;
Bestimmen einer einem gewählten Richtlinien-Routing entsprechenden Strecke gemäß der Beziehung zwischen einem Richtlinien-Routing und einer Strecke (301, 302, 602, 603) und
Durchsuchen der Streckenzustandsinformationen des ersten PE in dem zweiten PE nach einem Zustand der Strecke, die dem gewählten Richtlinien-Routing entspricht (303, 604);
Verwenden des gewählten Richtlinien-Routings, wenn der Zustand der Strecke normal ist (304, 605);
Umschalten zu einem zweiten Richtlinien-Routing, wenn der Zustand der Strecke abnorm ist (305, 606);
wobei der Streckenzustand des ersten PE ein Zustand einer Strecke zwischen einem Teilnehmergerät CE und dem ersten PE ist.

2. Verfahren nach Anspruch 1, ferner mit den folgenden Schritten:
Bestimmen, ob ein Zustand einer Strecke, die dem zweiten Richtlinien-Routing entspricht, normal ist, wenn zu dem zweiten Richtlinien-Routing umgeschaltet wird; und
Bestimmen, zu einem anderen Richtlinien-Routing umzuschalten, wenn der Zustand der Strecke, die dem zweiten Richtlinien-Routing entspricht, abnorm ist.

3. Verfahren nach Anspruch 1, wobei das Aufzeichnen der Streckenzustandsinformationen des ersten PE (601) Folgendes umfasst:
Erzeugen einer ersten Streckenzustandsliste des ersten PE in dem zweiten PE; und
wobei das Durchsuchen der Streckenzustandsinformationen des ersten PE in dem zweiten PE nach einem Zustand der Strecke Folgendes umfasst: Durchsuchen der ersten Streckenzustandsliste nach dem Zustand der Strecke.

4. Verfahren nach Anspruch 1 oder 2, wobei das Aufzeichnen der Streckenzustandsinformationen des ersten PE in dem zweiten PE durch das zweite PE beim Empfang der Streckenzustandsinformationen des ersten PE durch die BFD-Sitzung (601) Folgendes umfasst:
Detektieren des Streckenzustands des ersten PE (203, 503) durch das erste PE und
Benachrichtigen des zweiten PE durch das erste PE über die Streckenzustandsinformationen des ersten PE durch die BFD-Sitzung (203, 503) und
Aufzeichnen der Streckenzustandsinformationen des ersten PE aus dem ersten PE in dem zweiten PE durch das zweite PE.

5. Verfahren nach Anspruch 4, wobei das Detektieren des Streckenzustands des ersten PE (203, 503) Folgendes umfasst:
Detektieren, ob eine Änderung des Streckenzustands des ersten PE vorliegt; und
wobei das Benachrichtigen des zweiten PE über die Streckenzustandsinformationen des ersten PE (203, 503) Folgendes umfasst:
Benachrichtigen des zweiten PE über die Streckenzustandsinformationen des ersten PE durch die BFD-Sitzung, wenn eine Änderung des Streckenzustands des ersten PE vorliegt.

6. Verfahren nach Anspruch 5, wobei die Änderung des Streckenzustands eine der folgenden Alternativen umfasst:
die Änderung des Streckenzustands des ersten PE von einem normalen Zustand zu einem abnormen Zustand; und
die Änderung des Streckenzustands des ersten PE von einem abnormen Zustand zu einem normalen Zustand.

7. Verfahren nach Anspruch 4, wobei der Streckenzustand des ersten PE durch den folgenden Schritt an die BFD-Sitzung gebunden wird:
lokales Erzeugen einer ersten Streckenzustandsliste fiir den Streckenzustand des ersten PE durch das erste PE.

8. Verfahren nach Anspruch 7, wobei das Detektieren des Streckenzustands des ersten PE (203, 503) Folgendes umfasst:
Detektieren jedes Streckenzustands in der ersten Streckenzustandsliste.

9. Verfahren nach Anspruch 4, wobei das Benachrichtigen der zweiten PE über die Streckenzustandsinformationen des ersten PE durch die BFD-Sitzung (203, 503) Folgendes umfasst:
Aufnehmen des Streckenzustands des ersten PE in ein Feld eines Pakets der BFD-Sitzung und
Senden des Pakets zu dem zweiten PE; wobei
das Feld in dem Paket zur Anzeige des Streckenzustands gesetzt wird.

10. Verfahren nach Anspruch 5, wobei das Benachrichtigen des zweiten PE über den Streckenzustand des ersten PE durch die BFD-Sitzung (203, 503) Folgendes umfasst:
Aufnehmen des geänderten Streckenzustands des ersten PE in ein Feld eines Pakets der BFD-Sitzung und
Senden des Pakets zu dem zweiten PE; wobei
das Feld in dem Paket zur Angabe des Streckenzustands gesetzt wird.

11. Vorrichtung zur Ende-zu-Ende-Richtlinien-Routing-Umschaltung, umfassend:
eine Streckenzustands-Aufzeichnungseinheit (801) zum Aufzeichnen von Streckenzustandsinformationen eines Anbietergeräts PE an einem Peer-Ende, wobei ein Streckenzustand des PE an dem Peer-Ende an eine Sitzung mit Zuverlässigkeitsdetektionsmechanismus gebunden wird und die Streckenzustandsinformationen des PE an dem Peer-Ende durch die BFD-Sitzung empfangen werden;
eine streckenbezogene Richtlinien-Routing-Einheit (802) zum Konfigurieren einer Beziehung zwischen einem Richtlinien-Routing und einer Strecke; und
eine Umschalteinheit (803) zum Bestimmen einer Strecke, die einem gewählten Richtlinien-Routing entspricht, gemäß der Beziehung zwischen einem Richtlinien-Routing und einer Strecke und zum Umschalten eines Richtlinien-Routings gemäß einem Zustand der Strecke, die dem gewählten Richtlinien-Routing entspricht, der in der Streckenzustands-Aufzeichnungseinheit aufgezeichnet wird;
wobei der Streckenzustand des PE an dem Peer-Ende ein Zustand einer Strecke zwischen einem Teilnehmergerät CE und dem PE an dem Peer-Ende ist.

## Revendications

1. Procédé destiné à une commutation de routage de politique de bout en bout, comprenant les opérations consistant à :
lorsqu'un état de lien d'un premier équipement d'opérateur, PE, est lié à une session BFD (détection d'émission bidirectionnelle) établie entre le premier PE et un deuxième PE,
faire enregistrer, par le deuxième PE, des informations d'état de lien du premier PE dans le deuxième PE après avoir reçu les informations d'état de lien du premier PE par l'intermédiaire de la session BFD (601) ;
configurer une relation entre un routage de politique et un lien ;
déterminer un lien qui correspond à un routage de politique sélectionné en fonction de la relation entre un routage de politique et un lien (301, 302, 602, 603), et
rechercher les informations d'état de lien du premier PE dans le deuxième PE afin de trouver un état du lien qui correspond au routage de politique sélectionné (303, 604) ;
adopter le routage de politique sélectionné si l'état du lien est normal (304, 605) ;
commuter vers un deuxième routage de politique si l'état du lien est anormal (305, 606) ;
l'état de lien du premier PE étant un état d'un lien entre un équipement de Client, CE, et le premier PE.

2. Procédé selon la revendication 1, comprenant en outre les opérations consistant à :
déterminer si un état d'un lien correspondant au deuxième routage de politique est normal, ou non, lors de la commutation vers le deuxième routage de politique ; et
décider de commuter vers un autre routage de politique lorsque l'état du lien correspondant au deuxième routage de politique est anormal.

3. Procédé selon la revendication 1, l'enregistrement des informations d'état de lien du premier PE (601) comprenant les opérations consistant à :
créer une première liste d'états de lien du premier PE dans le deuxième PE ; et
rechercher les informations d'état de lien du premier PE dans le deuxième PE afin de trouver un état de lien, opération qui comprend l'action consistant à :
faire une recherche dans la première liste d'états de lien afin de trouver l'état du lien.

4. Procédé selon la revendication 1 ou 2, l'enregistrement, par le deuxième PE, des informations d'état de lien du premier PE dans le deuxième PE, après avoir reçu les informations d'état de lien du premier PE par l'intermédiaire de la session BFD (601) comprenant les opérations consistant à :
faire détecter, par le premier PE, l'état de lien du premier PE (203, 503), et
faire en sorte que le premier PE notifie au deuxième PE les informations d'état de lien du premier PE par l'intermédiaire de la session BFD (203, 503), et
faire enregistrer, par le deuxième PE, les informations d'état de lien du premier PE provenant du premier PE dans le deuxième PE.

5. Procédé selon la revendication 4, la détection de l'état de lien du premier PE (203, 503) comprenant les opérations consistant à :
détecter s'il existe ou non un changement dans l'état de lien du premier PE ; et
notifier au deuxième PE les informations d'état de lien du premier PE (203, 503), opération qui comprend l'action consistant à :
notifier au deuxième PE les informations d'état de lien du premier PE par l'intermédiaire de la session BFD lorsqu'il existe un changement dans l'état de lien du premier PE.

6. Procédé selon la revendication 5, le changement dans l'état de lien comprenant l'une des situations suivantes :
le changement dans l'état de lien du premier PE, à savoir d'un état normal à un état anormal ; et
le changement dans l'état de lien du premier PE, à savoir d'un état anormal à un état normal.

7. Procédé selon la revendication 4, l'état de lien du premier PE étant lié à la session BFD grâce à l'opération consistant à :
faire créer au plan local, par le premier PE, une première liste d'états de lien pour l'état de lien du premier PE.

8. Procédé selon la revendication 7, la détection de l'état de lien du premier PE (203, 503) comprenant l'opération consistant à :
détecter chaque état de lien dans la première liste d'états de lien.

9. Procédé selon la revendication 4, la notification au deuxième PE des informations d'état de lien du premier PE par l'intermédiaire de la session BFD (203, 503) comprenant les opérations consistant à :
inclure l'état de lien du premier PE dans un champ sur un paquet de la session BFD, et envoyer le paquet au deuxième PE ;
le champ étant paramétré dans le paquet de sorte à indiquer l'état du lien.

10. Procédé selon la revendication 5, la notification au deuxième PE de l'état de lien du premier PE par l'intermédiaire de la session BFD (203, 503) comprenant les opérations consistant à :
inclure l'état de lien modifié du premier PE dans un champ sur un paquet de la session BFD, et
envoyer le paquet au deuxième PE ;
le champ étant paramétré dans le paquet de sorte à indiquer l'état du lien.

11. Appareil destiné à une commutation de routage de politique de bout en bout, comprenant :
une unité d'enregistrement d'états de lien (801) permettant d'enregistrer des informations d'état de lien d'un équipement d'opérateur, PE, au niveau d'un côté Poste,
un état de lien du PE au niveau du côté Poste étant lié à une session du mécanisme de détection de la fiabilité et les informations d'état de lien du PE au niveau du côté Poste étant reçues par l'intermédiaire de la session BFD ;
une unité de routage de politique associée à un lien (802), afin de configurer une relation entre un routage de politique et un lien ; et
une unité de commutation (803) pour déterminer un lien qui correspond à un routage de politique sélectionné en fonction de la relation existant entre un routage de politique et un lien, et pour commuter un routage de politique en fonction d'un état du lien qui correspond au routage de politique sélectionné ayant été enregistré dans l'unité d'enregistrement d'états de lien ;
l'état de lien du PE au niveau du côté Poste étant un état d'un lien entre un équipement de Client, CE, et le PE au niveau du côté Poste.
